# EUROPEAN PATENT APPLICATION

(11) **EP 1 523 014 A2**
(43) Date of publication of application: **13.04.2005**
(21) Application number: 04104822.4
(22) Date of filing: 01.10.2004
(51) Int. Cl.: G21K 4/00, C09K 11/85

(54) **Radiographic image conversion panel and method for manufacturing the radiographic image conversion panel**

(30) Priority: 10.10.2003 JP 2003352596; 20.11.2003 JP 2003390787
(71) Applicant: Konica Minolta Medical & Graphic Inc., Tokyo 163-0512 (JP)
(72) Inventor: Maezawa, Akihiro, 191-8511, Tokyo (JP); Kishinami, Katsuya, 191-8511, Tokyo (JP)
(74) Representative: Gille Hrabal Struck Neidlein Prop Roos

(57) **Abstract**

A radiographic image conversion panel comprises: a support, and a photostimulable phosphor layer formed by a vapor phase deposition method on the support; wherein the support comprises a substrate and a heat resistant resin layer applied onto one surface of the substrate and the photostimulable phosphor layer is formed on a resistant resin layer side of the support.

## Description

### BACKGROUND OF THE INVENTION

### Field of the Invention

The present invention relates to a radiographic image conversion panel using a photostimulable phosphor and a method for manufacturing the radiographic image conversion panel.

### Description of Related Art

Conventionally, as a method for obtaining a radiographic image without using a silver salt, a radiographic image conversion panel where a photostimulable phosphor is installed on a support has been developed.

The radiographic image conversion panel can accumulate radiation energy corresponding to a density of radiation transmitted through each part of a photographic subject by irradiating the radiation transmitted through the photographic subject onto a photostimulable phosphor layer. Subsequently, the radiation energy accumulated in the photostimulable phosphor is released as photostimulated luminescence when the photostimulable phosphor is excited with electromagnetic waves (excitation light) such as visible ray and infrared in time series. Signals according to these light intensity can be regenerated as a visible image on a recording material such as silver halide photographic sensitive material or a display device such as CRT, for example, by performing photoelectric conversion of these signals into electric signals.

It has been known that superiority or inferiority of a radiographic image conversion system using the radiographic image conversion panel highly depends on photostimulated luminescence luminance and luminescence uniformity of the panel, and particularly that these properties are highly dominated by the properties of the photostimulable phosphor used.

In order to enhance luminance and sharpness of the radiographic image conversion panel, for example, in JP Tokukai 2002-214397A, the luminance and the sharpness are enhanced by making a thickness of a phosphor layer a range of 300 to 700 µm and making a relative density 85 to 97%.

Also, in JP Tokukai 2003-028995A, it is shown that the radiographic image conversion panel with high luminance is obtained by the use of the photostimulable phosphor denoted by the following general formula, particularly the photostimulable phosphor where e denotes a numerical value in the range of 0.003 ≤ e ≤ 0.005.

M¹X·aM²X'₂·bM³X"₃:eA,

wherein M¹ represents at least one alkali metal selected from the group consisting of Li, Na, K, Rb and Cs; M² represents at least one bivalent metal selected from the group consisting of Be, Mg, Ca, Sr, Ba, Zn, Cd, Cu and Ni; M³ represents at least one trivalent metal selected from the group consisting of Sc, Y, La, Ce, Pr, Nd, Pm, Sm, Eu, Gd, Tb, Dy, Ho, Er, Tm, Yb, Lu, Al, Ga and In; X, X' and X" respectively represent at least one halogen selected from the group consisting of F, Cl, Br and I; A represents at least one metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg; and a, b and c denote numerical values in the ranges of 0≤a<0.5, 0≤b<0.5, and 0.0001<e≤1.0, respectively.

Recently, a radiation panel using the photostimulable phosphor where Eu is activated by alkali halide such as CsBr as a basic substance has been proposed. Particularly, enhancement of X-ray conversion efficiency which has been conventionally impossible becomes possible by making Eu an activator, and the radiation panel is frequently used for X-ray imaging diagnostic equipments for medical use.

In the radiographic image conversion panel, the photostimulable phosphor layer is installed by depositing the above photostimulable phosphor on a substrate. As the substrate used for the radiographic image conversion panel, various polymer materials, glass and metals are known (e.g., see JP Tokukai 2001-83299A).

However, depending on materials of the substrate, there was problematic in that the surface was irregular and moldability has been poor when the photostimulable phosphor was deposited. Also, when a resin which was easily affected by heat was used as the substrate, there has been a possibility that the substrate was deformed by the heat of vapor flow when the photostimulable phosphor is deposited. An absorption amount of radiation energy of X-ray and the like is large in the glass or the metal, and thus it has been difficult to make the luminance high in a system where the radiographic image conversion panel receives the radiation from the substrate side.

By the way, in a reading apparatus such as X-ray imaging diagnostic equipment for the medical use, there are many cases of employing a reading mode where the radiographic image conversion panel is disposed vertically or horizontally as well as it is supported at an edge section, X-ray is irradiated from one face and the excitation light is irradiated to the other face to read the photostimulated luminescence. In such an apparatus, there has been defective in that the radiographic image conversion panel vibrates to produce transverse line-shaped noise on a reproduced image when vibration is given to the apparatus at image reading.

However, in the reading apparatus such as X-ray imaging diagnostic equipment for the medical use, since the radiographic image conversion panel is vertically disposed and a reading mechanism section approaches from an upper section of the radiographic image conversion panel, there are many cases in which right and left edge sections and a lower edge section of the radiographic image conversion panel are supported. In such a reading apparatus, even when the rigidity in both lengthwise and crosswise directions of the radiographic image conversion panel is enhanced, it has been impossible to efficiently prevent the vibration of the radiographic image conversion panel.

### SUMMARY OF THE INVENTION

An object of the invention is to provide a radiographic image conversion panel which can exhibit high luminance and high sharpness with no crack of a photostimulable phosphor layer, inhibit transverse line-shaped noise produced on a reproduced image caused by the vibration given to the radiographic image conversion panel which is used while being vertically disposed and being supported at right and left edge sections and a lower edge section, and afford the reproduced image with good quality.

In order to accomplish the above object, according to a first aspect of the invention, a radiographic image conversion panel comprises a support, and a photostimulable phosphor layer formed by a vapor phase deposition method on the support; wherein the support comprises a substrate and a heat resistant resin layer applied onto one surface of the substrate, and the photostimulable phosphor layer is formed on a resistant resin layer side of the support.

According to the radiographic image conversion panel in the above first aspect, since the support comprises the substrate and the heat resistant resin layer applied on the one face of the substrate, surface property of the substrate can be improved. Additionally, since a thermal expansion coefficient of the heat resistant resin layer is close to that of the photostimulable phosphor layer, occurrence of crack can be prevented when the photostimulable phosphor layer is formed. Therefore, since the photostimulable phosphor layer can be smoothly formed, it is possible to obtain reproduced images with fine quality.

In this first aspect, it is preferred that the substrate comprises at least one selected from the group consisting of thermosetting resin, carbon fiber reinforced plastic and thermoplastic resin.

By the substrate comprises at least the thermosetting resin, carbon fiber reinforced plastic or thermoplastic resin, it is possible to obtain similar effects to those of the radiographic image conversion panel in the above first aspect. Also, when the carbon fiber reinforced plastic plate is used for the substrate, it is possible to make the support capable of resisting the heat when the photostimulable phosphor layer is installed as well as determine a rigid value to an arbitrary value.

Also, in this first aspect, it is preferred that the heat resistant resin layer comprises at least one selected from the group consisting of polyimide, polyamideimide, and fluorine resin.

By the heat resistant resin layer comprising at least one of polyimide, polyamideimide and fluorine resin, the thermal expansion coefficient of the heat resistant resin layer is close to that of the photostimulable phosphor layer, and thus the occurrence of crack can be prevented when the photostimulable phosphor layer is formed. Therefore, since the photostimulable phosphor layer is smoothly formed, it is possible to obtain reproduced images with fine quality.

Also, in this first aspect, it is preferred that the heat resistant resin layer has a light reflectance of 8 % or more at a wavelength of 400 to 500 nm and the light reflectance of 5 to 70 % at a wavelength of 640 to 700 nm.

By making the reflectance of the light with a wavelength of 400 to 500 nm 8% or more and making the reflectance of the light with a wavelength of 640 to 700 nm 5 to 70% in the heat resistant resin layer, it is possible to obtain the support where the reflectance of the light with a wavelength of 400 to 500 nm (photostimulated luminescence wavelength) is high and the reflectance of the light with a wavelength of 640 to 700 nm (excitation wavelength) is slightly low.

Because of the low reflectance of the light at an excitation wavelength of the support, the excitation light emitted from the photostimulable phosphor layer side is less reflected at the support, the photostimulable phosphor is not excited with the reflected excitation light, and thus it is possible to reproduce the image with high sharpness degree. Also, the reflectance of the light at a photostimulated luminescence wavelength is high, therefore, the photostimulated luminescence is released from the photostimulable phosphor layer only toward the phosphor layer side of the support. Thus, the image with higher luminance can be reproduced.

Also in this first aspect, it is preferred that a rigid value of the substrate in a crosswise direction is larger than the rigid value in a lengthwise direction, the rigid value in the crosswise direction is 3 to 200 kgf·mm², and the rigid value in the lengthwise direction is 1 to 150 kgf·mm².

The radiographic image conversion panel is attached to an attach frame of upper open type in the radiographic image conversion apparatus. Accordingly, a direction vertical to ground surface is a lengthwise direction and a horizontal direction is a crosswise direction. By making the rigid value in the crosswise direction greater than that in the lengthwise direction in the substrate and making the rigid values in the crosswise direction and in the lengthwise direction 3 to 200 kgf·mm² and 1 to 150 kgf·mm², respectively, even when vibration is given to the reading apparatus at detection of the photostimulated luminescence while irradiating the excitation light to the photostimulable phosphor layer, obtained images are resistant to the vibration, and transverse line-shaped noise can be inhibited.

Also in this first aspect, it is preferred that the above photostimulable phosphor layer comprises a photostimulable phosphor represented by the following general formula (1):

CsX:eA (1),

wherein X represents Cl, Br or I, A represents Eu, Sm, In, Tl, Ga or Ce, and e represents a numerical value within a range of 1 x 10⁻⁷< e <1 x 10⁻².

By forming the photostimulable phosphor layer from the photostimulable phosphor represented by the general formula (1), it is possible to obtain the radiographic image conversion panel with higher luminance.

According to a second aspect of the invention, a method for manufacturing a radiographic image conversion panel comprises: forming a support by applying a heat resistance resin onto one surface of a substrate by a spray-coating, and subsequently, and forming a photostimulable phosphor layer onto one surface of the support where the heat resistant resin is applied, by a vapor phase deposition method.

According to the method for manufacturing the radiographic image conversion panel in the above second aspect, by spray-coating the heat resistant resin onto one face of the substrate to form the support, it is possible to make concavoconvex of the substrate flat, and then smoothly form the photostimulable phosphor layer on the surface of the substrate, on which the heat resistant resin has been applied by the vapor phase deposition method.

### BRIEF DESCRIPTION OF THE DRAWINGS

The invention will be fully understood by the following detailed description and accompanying drawings, but these are solely for illustration and do not limit the scope of the invention, and wherein;
FIG. 1 is a sectional view showing an embodiment of the radiographic image conversion panel of the invention; and
FIG. 2 is a sectional view showing a method for forming a photostimulable phosphor layer of the radiographic image conversion panel in the invention.

### DETAILED DESCRIPTION OF THE INVENTION

Hereinafter, the radiographic image conversion panel according to the invention is illustrated.

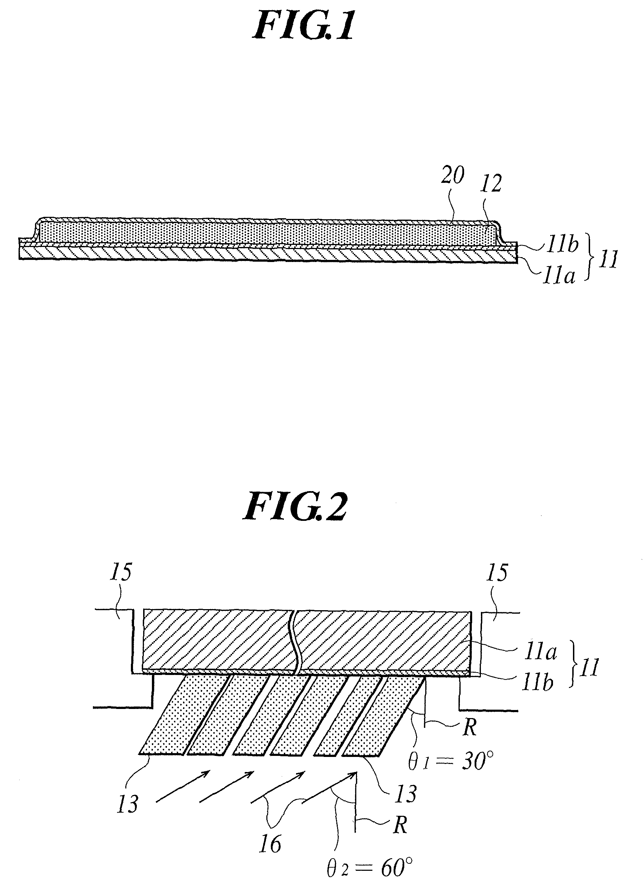

The radiographic image conversion panel comprises a support 11 where a heat resistant resin layer 11b is applied onto one face of a support 11, a photostimulable phosphor layer 12 formed on the face at the side of the heat resistant resin layer 11b of the substrate 11a and a protection layer 20 which coats the photostimulable phosphor layer 12 to protect, as is shown in FIG. 1.

In the radiographic image conversion panel of the invention, as the substrate 11a, it is preferable to use one where a rigid value in a crosswise direction is greater than a rigid value in a lengthwise direction. It is preferred that the rigid value in the crosswise direction is from 3 to 200 kgf·mm² and the rigid value in the lengthwise direction is from 1 to 150 kgf·mm².

As the substrate 11a which fulfills a condition of the above rigid values, for example, it is possible to use carbon fiber reinforced plastic sheet (Prepreg) where carbon fibers are impregnated in a resin. As Prepreg, there are one way Prepreg where the carbon fibers are aligned in one way and textile Prepreg where the carbon fibers are woven into plain fabric or twilled fabric. Since the textile Prepreg has concavoconvex on the surface, it is preferable to apply the one way Prepreg in order to make the surface of the substrate 11a flat. In order to form the substrate using the one way Prepreg, Prepregs could be integrated by alternately overlapping them in the lengthwise and cross wise directions and pressure-bonding them.

As the substrate 11a, in addition to this, it is possible to use, for example, sheet glass such as quartz, borosilicate glass, chemically reinforced glass and crystallized glass, thermosetting plastic film such as cellulose acetate film, polyester film, polyethylene terephthalate film, polyamide film, polyimide film, epoxy film, polyamideimide film, bismaleimide film, fluorine resin film, siloxane film, acrylic film and polyurethane film, sheets made up of thermoplastic resins such as nylon 12, nylon 6, polycarbonate, polyphenylene sulfide, polyethersulfone and polyetherimide and laminations thereof, sheets of metals such as aluminium, iron, copper and chromium or metal sheets having a coating layer of hydrophilic fine particles.

When for the substrate 11a, using reflective materials such as a resin plate where aluminium, white polyethylene terephthalate, or silver foil is laminated, it is preferable because photostimulated luminescence of the radiographic image conversion panel where X-ray is entered from the side of the substrate 11a can be efficiently condensed. However, there is a concern that the sharpness degree is reduced. Thus, design of a thickness of the photostimulable phosphor layer 12 mentioned below becomes important.

Here, the reflective materials refer to materials where the reflectance of the light with a wavelength of 400 to 500 nm is 60% or more and the reflectance of the light with a wavelength of 640 to 700 nm is 50% or more. In the substrate 11a, it is preferred that the reflectance of the light with photostimulated luminescence wavelength (400 to 500 nm) is high whereas the reflectance of the light with reading laser wavelength (640 to 700 nm) is low. By reducing the reflectance of the light with reading laser wavelength, it is possible to enhance the sharpness degree, and by elevating the reflectance of the light with photostimulated luminescence wavelength, it is possible to enhance luminescence luminance.

A thickness of the substrate 11a is varies depending on the material used, and is generally from 80 to 5000 µm, and in terms of handling, more preferable is from 250 to 4000 µm.

It is preferable to install the heat resistant resin layer 11b on the face of the substrate 11a on which the photostimulable phosphor layer 12 is formed. By installing the heat resistant resin layer 11b, it is possible to smooth the surface of the substrate 11a and smoothly form the photostimulable phosphor layer 12.

As the heat resistant resin, it is preferred that Tg is 180°C or more, and it is possible to use at least one of polyimide, polyamideimide, fluorine resins, acrylic resins, siloxane, and the like. Among them, polyimide, polyamideimide and fluorine resins are preferable because thermal expansion coefficients thereof are close to the thermal expansion coefficient of the photostimulable phosphor layer 12 mentioned below and thus cracks of the photostimulable phosphor layer 12 hardly occur.

As a method for installing the heat resistant resin layer 11b on the substrate 11a, there are the method of laminating a resin sheet and the method of coating the resin on the substrate 11a, and the latter is preferable. This is because by installing the heat resistant resin layer 11b by coating, it is possible to cover the concavoconvex on the surface of the substrate 11a and make a formation face of the photostimulable phosphor layer 12 flat.

As a method for coating the heat resistant resin, there are the methods using a spin coater or a bar coater, and the method by spray-coating and the like, and the spray-coating is preferable. The spray-coating may be either the method of moving a spraygun at a constant speed in which the substrate 11a is fixed or the method of performing the spray coating by one or multiple fixed spray nozzle(s) with moving the substrate at a constant speed. When a size of the substrate 11a is 350 mm square or more, the method of performing the spray coating by multiple fixed spray nozzles with moving the substrate 11a at a constant speed is preferable.

A dry film thickness of the heat resistant resin layer 11b is preferably from 10 to 150 µm, and particularly preferably from 20 to 100 µm. When the layer is excessively thin, the concavoconvex of the substrate 11a is remarkably shown on the surface. When it is excessively thick, a film thickness distribution becomes poor due to recoating.

In the heat resistant resin layer 11b, it is preferred that the reflectance of the light with reading laser wavelength (640 to 700 nm) is low. When the reflectance of the light with reading laser wavelength is excessively high, it may cause reduction of the sharpness degree. When the reflectance of the light with reading laser wavelength is low, the sharpness can be enhanced. The reflectance of the light at 640 to 700 nm could be from 5 to 70%, preferably from 5 to 50%.

Also, in the heat resistant resin layer 11b, it is preferred that the reflectance of the light with photostimulated luminescence wavelength (400 to 500 nm) is high. When the reflectance of the light with photostimulated luminescence wavelength is high, the luminescence luminance can be enhanced. It is preferable that the reflectance of the light at 400 to 500 nm is 8% or more, more preferably 20% or more.

As in the above, the heat resistant resin layer 11b is installed on the substrate 11a, and the photostimulable phosphor layer 12 is installed on the face of the heat resistant resin layer 11b, opposite to the substrate 11a.

As the photostimulable phosphor preferably used for the invention, it is possible to use those represented by the following general formula:

M¹X·aM²X'₂·bM³X"₃·eA

Wherein M¹ represents at least one alkali metal selected from the group consisting of Li, Na, K, Rb and Cs, and particularly preferably at least one alkali metal selected from the group consisting of K, Rb and Cs,
M² represents at least one bivalent metal selected from the group consisting of Be, Mg, Ca, Sr, Ba, Zn, Cd, Cu and Ni, and preferably at least one bivalent metal selected from the group consisting of Be, Mg, Ca, Sr and Ba,
M³ represents at least one trivalent metal selected from the group consisting of Sc, Y, La, Ce, Pr, Nd, Pm, Sm, Eu, Gd, Tb, Dy, Ho, Er, Tm, Yb, Lu, Al, Ga and In, and preferably one trivalent metal selected from the group consisting of Y, La, Ce, Sm, Eu, Gd, Lu, Al, Ga and In,
X, X' and X" represent at least one halogen selected from the group consisting of F, Cl, Br and I, and particularly it is preferred that X is at least one halogen selected from the group consisting Br and I.

A represents at least one metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg, and particularly preferably at least one metal selected from the group consisting of Eu, Cs, Sm, Tl and Na, and
a, b and c denote numerical values in the ranges of 0≤a<0.5, 0≤b<0.5, and 0<e≤0.2, respectively, and particularly it is preferred that b denotes the numerical value in the range of 0≤b≤10⁻².

Particularly, it is preferred that the above photostimulable phosphor layer 12 has the photostimulable phosphor represented by the following general formula (1).

CsX:eA (1)

wherein X represents Cl, Br, or I; A represents Eu, Sm, In, Tl, Ga or Ce, and e denoted a numerical number in the range of 1 x 10⁻⁷<e<1 x 10⁻².

The above photostimulable phosphor is manufactured using, for example, the following phosphor materials (a) to (d) by the manufacturing method mentioned below.
(a) At least one compounds selected from the group consisting of LiF, LiCl, LiBr, LiI, NaF, NaCl, NaBr, NaI, KF, KCl, KBr, KI, RbF, RbCl, RbBr, RbI, CsF, CsCl, CsBr, and CsI.
(b) At least one compounds selected from the group consisting of BeF₂, BeCl₂, BeBr₂, BeI₂, MgF₂, MgCl₂, MgBr₂, MgI₂, CaF₂, CaCl₂, CaBr₂, CaI₂, SrF₂, SrCl₂, SrBr₂, SrI₂, BaF₂, BaCl₂, BaBr₂, BaI₂, ZnF₂, ZnCl₂, SnBr₂, ZnI₂, CdF₂, CdCl₂, CdBr₂, CdI₂, CuF₂, CuCl₂, CuBr₂, CuI₂, NiF₂, NiCl₂, NiBr₂, and NiI₂.
(c) At least one compounds selected from the group consisting of ScF₃, ScCl₃, ScBr₃, S_{C}I₃, YF₃, YCl₃, YBr₃, YI₃, LaF₃, LaCl₃, LaBr₃, LaI₃, CeF₃, CeCl₃, CeBr₃, CeI₃, PrF₃, PrCl₃, PrBr₃, PrI₃, NdF₃, NdCl₃, NdBr₃, NdI₃, PmF₃, PmCl₃, PmBr₃, PmI₃, SmF₃, SmCl₃, SmBr₃, SmI₃, EuF₃, EuCl₃, EuBr₃, EuI₃, GdF₃, GdCl₃, GdBr₃, GdI₃, TbF₃, TbCl₃, TbBr₃, TbI₃, DyF₃, DyCl₃, DyBr₃, DyI₃, HoF₃, HoCl₃, HoBr₃, HoI₃, ErF₃, ErCl₃, ErBr₃, ErI₃, TmF₃, TmCl₃, TmBr₃, TmI₃, YbF₃, YbCl₃, YbBr₃, YbI₃, LuF₃, LuCl₃, LuBr₃, LuI₃, AlF₃, AlCl₃, AlBr₃, AlI₃, GaF₃, GaCl₃, GaBr₃, GaI₃, InF₃, InCl₃, InBr₃, and InI₃.
(d) At least one metals selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg.

The above phosphor materials (a) to (d) are weighed to meet the ranges of a, b and e of the general formula (1), and mixed in purified water. At that time, the materials may be thoroughly mixed using a mortar, ball mill, mixer mill, and the like.

Next, a prescribed acid is added to adjust a pH value C of the resulting mixed solution to 0<C<7, and subsequently, water content thereof is evaporated/vaporized.

Next, the resulting material mixture is filled in a heat-proof container such as a quartz crucible or alumina crucible, and sintered in an electric furnace. It is preferred that a sintering temperature is from 500 to 1000°C. A sintering time varies depending on a filled amount, the sintering temperature and the like of the material mixture, and is preferably from 0.5 to 6 hours.

As a sintering atmosphere, a mild reducing atmosphere such as a nitrogen gas atmosphere containing a small amount of hydrogen and a carbon dioxide gas atmosphere containing a small amount of carbon monoxide, a neutral atmosphere such as the nitrogen gas atmosphere and an argon gas atmosphere, and a mild oxidizing atmosphere containing a small amount of oxygen gas are preferable.

The luminescence luminance of the photostimulable phosphor can be further enhanced by sintering once under the above sintering condition, then taking out a sintered matter from the electric furnace and pulverizing, subsequently, again filling the heat-proof container with sintered powder, placing in the electric furnace, and sintering again under the same sintering condition. Also, the desired photostimulable phosphor can be obtained by taking out the sintered matter from the electric furnace and standing to cool in air when the sintered matter is cooled from the sintering temperature to room temperature. However, the sintered matter may be cooled in the same mild reducing atmosphere, neutral atmosphere or mild oxidizing atmosphere as that at sintering.

Also by moving the sintered matter from a heating section to a cooling section in the electric furnace and rapidly cooling in the mild reducing atmosphere, neutral atmosphere or mild oxidizing atmosphere, it is possible to further enhance the luminescence luminance by photostimulation of the obtained photostimulable phosphor.

The photostimulable phosphor layer 12 is formed by depositing the above photostimulable phosphor in which the above photostimulable phospher is used as an evaporation source in vapor phase on one face of the substrate 11a. As a vapor phase deposition method, it is possible to use a deposition method, sputtering method, CVD method and others.

In the deposition method, first, the substrate 11a is placed in a deposition apparatus, and subsequently, inside the apparatus is exhausted so as to be a vacuum degree of about 1.333 x 10⁻⁴ Pa. Then, the photostimulable phosphor is placed as the evaporation source in an evaporation source in the deposition apparatus, and heated/evaporated by a method such as resistance heating method and electron beam method to grow the photostimulable phosphor to the desired thickness on the surface of the substrate 11a.

As a result, the photostimulable phosphor layer 12 containing no binder is formed. In the above deposition step, it is also possible to form the photostimulable phosphor layer 12 by divided multiple steps.

Also, in the above deposition step, it is also possible to synthesize the objective photostimulable phosphor on the substrate 11a and simultaneously form the photostimulable phosphor layer 12 by using multiple resistance heating machines or electron beams, where multiple photostimulable phosphor materials are used as the evaporation sources and are co-deposited.

When the photostimulable phosphor layer 12 is made by the above vapor phase deposition method, it is preferred that the temperature of the support 11 on which the photostimulable phosphor layer 12 is formed is set at 50 to 400°C. In terms of phosphor properties, the temperature is preferably from 100 to 250°C. Considering heat resistance of the resin, when the resin is used for the substrate, it is from 50 to 150°C, more preferably from 50 to 100°C.

FIG. 2 is a view showing an appearance that the photostimulable phosphor layer 12 is formed by the deposition on the support 11. When an incident angle of vapor flow 16 of the photostimulable phosphor with respect to normal (R) of the face of the heat resistant resin layer 11b side of the support 11 secured to support holders 15 is θ₂ (e.g., 60° in the figure) and an angle of the formed columnar crystal 13 against the normal line direction (R) of the substrate 11a face is θ₁ (e.g., 30° in the figure), then θ₁ empirically becomes about a half of θ₂ and the columnar crystals 13 are formed at this angle.

A growth angle of the columnar crystals of the photostimulable phosphor could be from 0 to 70°, and is preferably from 0 to 55°.

Among them cases, it is preferred that a distance of the shortest section between the support 11 and the evaporation source is set to approximately 10 cm to 80 cm in conformity with a mean distance of flight of the photostimulable phosphor.

In order to improve the sharpness degree (MTF) in the photostimulable phosphor layer 12 made up of the columnar crystals, a size of the columnar crystal is preferably from 1 to 50 µm, and more preferably from 1 to 30 µm. That is, when the columnar crystal is thinner than 1 µm, MTF is reduced because the excitation light during photostimulation is scattered by the columnar crystal. Also when the columnar crystal is more than 50 µm, directivity of the excitation light during photostimulation is reduced to reduce MTF.

The size of the columnar crystal is a mean value of diameters of circles converted from sectional areas of respective columnar crystals when the columnar crystals are observed from a face parallel to the support 11, and is calculated from a micrograph containing at least 100 or more columnar crystals in a microscopic field.

Also, a size of an interval between respective columnar crystals is preferably 30 µm or less, and more preferably 5 µm or less. When the interval is more than 30 µm, a filling factor of the phosphor in the phosphor layer is reduced resulting in the reduction of luminance.

A thickness of the columnar crystal is affected by the temperature of the substrate 11a, the vacuum degree, the incident angle of vapor flow and the like, and it is possible to make the columnar crystals with desired thickness by controlling them.

In the sputtering method, as with the deposition method, the support 11 is placed in a sputtering apparatus, and subsequently an inside of the apparatus is once exhausted to be the vacuum degree of about 1.333 x 10⁻⁴ Pa. Then, an inert gas such as Ar and Ne is introduced as the gas for sputtering into the sputtering apparatus to be a gas pressure of about 1.333 x 10⁻¹ Pa. Next, the photostimulable phosphor layer 12 grows obliquely to the desired thickness on the support 11 by obliquely sputtering against the photostimulable phosphor as a target.

In the sputtering step, as with the deposition step, it is also possible to form the photostimulable phosphor layer 12 by divided into multiple steps, and also it is possible to form the objective photostimulable phosphor layer 12 on the support 11 by using multiple photostimulable phosphor materials as the targets and sputtering them simultaneously or sequentially. If necessary, reactive sputtering may be performed by introducing the gas such as O₂ and H₂. Further, at sputtering, if necessary, a deposited matter may be cooled or heated. Also, after the completion of sputtering, the photostimulable phosphor layer 12 may be treated with heat.

In the CVD method, the photostimulable phosphor layer 12 containing no binder is obtained on the support 11 by degrading an organic metal compound containing the objective photostimulable phosphor or photostimulable phosphor material with energy such as heat and high frequency electric power. Also by the CVD method, it is possible to obtain the photostimulable phosphor layer 12 by growing the photostimulable phosphor to independent slender columnar crystals in the vapor phase.

A film thickness of the photostimulable phosphor layer 12 formed by these method varies depending on luminance for the radiation of the objective radiographic image conversion panel, type of the photostimulable phosphor and the like, and is preferably in the range of 100 to 1000 µm, and more preferably in the range of 20 to 800 µm.

It is preferred that a growth rate of the photostimulable phosphor layer 12 in the vapor phase deposition method is from 0.05 to 300 µm/min. When the growth rate is less than 0.05 µm/min, it is not preferable because productivity of the radiographic image conversion panel is poor. Also, when the growth rate exceeds 300 µm/min, it is not preferable because control of the growth rate is difficult.

The photostimulable phosphor layer 12 formed on the support 11 in this way contains no binder, therefore, is excellent in directivity, has high directivity in the photostimulated luminescence excitation light and the photostimulated luminescence, and it is possible to make a layer thickness thicker than that in the radiographic image conversion panel having the dispersion type photostimulable phosphor layer 12 where the photostimulable phosphor is dispersed in the binder. Furthermore, the sharpness degree of images is enhanced by reducing scattering of the excitation light during photostimulation in the photostimulable phosphor layer 12.

Also, filling matters such as binder may be filled in spaces between columnar crystals, which reinforce the photostimulable phosphor layer 12. Also, a substance with high light absorptivity, a substance with high light reflectance and the like may be filled. As well as the reinforcement effect, this almost perfectly prevent light diffusion to the crosswise direction of the excitation light during photostimulation entered in the photostimulable phosphor layer 12.

The substances with high light reflectance refer to those with high reflectance of the photostimulated luminescence (400 to 600 nm, particularly 400 to 500 nm), and it is possible to use white pigments and color materials in the region of purple to blue (blue type color materials).

The white pigments include TiO₂ (anatase type, rutile type), MgO, PbCO₃·Pb(OH)₂, BaSO₄, Al₂O₃, MIIFX (M(II) is at least one of Ba, Sr and Ca, and X is at least one of Cl and Br), CaCO₃, ZnO, Sb₂O₃, SiO₂, ZrO₂, lithopone (BaSO₄·ZnS), magnesium silicate, basic lead silicate sulfate, basic lead phosphate, aluminium silicate, aluminium, magnesium, silver, indium and the like. These white pigments have high opacifying power and large refractive index, and thus it is possible to easily diffuse the photostimulated luminescence by reflecting or refracting the light to noticeably enhance the luminance of the obtained radiographic image conversion panel.

Blue type color materials may be either organic or inorganic color materials. As the organic color materials, Zabon Fast Blue (supplied from Hoechst AG), Estrol Brill Blue-N-3RL (supplied from Sumitomo Chemical Co., Ltd.), D & C blue No. 1 (supplied from National Aniline AG), Spirit Blue (supplied from Hodogaya Chemical Co., Ltd.), Oil Blue No. 603 (supplied from Orient Chemical Industries Ltd.), Kiton Blue A (supplied from Ciba-Geigy Corp.), Eisen Carotene Blue GLH (supplied from Hodogaya Chemical Co., Ltd.), Lake Blue AFH (supplied from Kyowa Sangyo Inc.), Primocyanine 6GX (supplied from Inahata & Co., Ltd.), Brill Acid Green 6BH (supplied from Hodogaya Chemical Co., Ltd.), Cyan Blue BNRCS (supplied from Toyo Ink Mfg. Co., Ltd.) Lionoil Blue SL (supplied from Toyo Ink Mfg. Co., Ltd.), and the like are used. Also, organic metal complex salt color materials such as color indices Nos. 24411, 23160, 74180, 74200, 22800, 23154, 23155, 24401, 14830, 15050, 15760, 15707, 17941, 74220, 13425, 13361, 13420, 11836, 74140, 74380, 74350 and 74460, and the like are included. The inorganic color materials include ultramarine blue, cobalt blue, cerulean blue, chromium oxide, and TiO₂-ZnO-Co-NiO type pigments.

As the substances with high light absorptivity, for example, carbon, chromium oxide, nickel oxide, ion oxide and the like are used. Among them, carbon also absorbs the photostimulated luminescence.

As described the above, the photostimulable phosphor layer 12 is formed, and subsequently if necessary, a protection layer 20 is installed on the side of the photostimulable phosphor layer 12 opposite to the substrate 11a. To form the protection layer 20, a coating solution for the protection layer may be directly applied on the surface of the photostimulable phosphor layer, or the protection layer 20 precedently separately formed may be adhered to the photostimulable phosphor layer 12.

As a material of the protection layer 20, it is possible to suitably use moisture-proof film. As the moisture-proof film, it is possible to use cellulose acetate, nitrocellulose, polymethyl methacrylate, polyvinyl butyral, polyvinyl formal, polycarbonate, polyester, polyethylene terephthalate, polyethylene, polyvinylidene chloride, nylon, polyethylene tetrafluoride, polyethylene trifluoride-chloride, ethylene tetrafluoride-propylene hexafluoride copolymer, vinylidene chloride-vinyl chloride copolymer, vinylidene chloride-acrylonitrile copolymer and the like. The resin film is easy in processing, there is no problem in strength during a manufacture process even when a thickness is thinned to 100 µm or less, and since it is a thin layer, it is preferable in terms of initial image quality.

Also, these moisture-proof resin films may have a laminated layer of an inorganic substance with low moisture permeability and oxygen permeability. As such an inorganic substance, there are SiOₓ(SiO, SiO₂), Al₂O₃, ZrO₂, SnO₂, SiC, SiN and the like. Among them, Al₂O₃ and SiOₓ are particularly preferable because transmittance of the light is high and the moisture and oxygen permeabilities are low, i.e., the occurrence of cracks and micropores is low and dense films can be formed. SiOₓ and Al₂O₃ may be laminated alone, but it is more preferable to laminate both SiOₓ and Al₂O₃ because the moisture and oxygen permeabilities can be further lowered when the both of them are laminated.

For the lamination of the inorganic substance on the resin film, it is possible to use the methods such as PVD method, sputtering method, CVD method, PE-CVD (plasma enhanced CVD) method and the like. The lamination may be performed after coating the phosphor layer with the resin film or before coating the phosphor layer. It is preferred that a lamination thickness is from about 0.01 to 1 µm. Or commercially available moisture-proof resin films where a deposition layer has been precedently formed may be used. As such moisture-proof resin films, there are, for example, GL-AE of Toppan Printing Co., Ltd., and the like.

### EXAMPLES

The invention is specifically illustrated below by citing examples, but embodiments of the invention are not limited thereto.

### <A> Supports were made by changing a combination of a substrate and a heat resistant resin layer.

### «MANUFACTURE OF RADIOGRAPHIC IMAGE CONVERSION PANEL ACCORDING TO EXAMPLE 1>>

A heat resistant resin layer made up of polyimide film with a thickness of 10 µm was formed by making a carbon fiber reinforced plastic plate (CFRP#155C impregnated resin cured epoxy resin supplied from Toho Tenax Co., Ltd.) with a thickness of 2 mm and a square size of 300 mm a substrate, coating polyimide (Underfill material Umekote supplied from Ube Industries Ltd.) thereon by a bar coater, and drying at two stages at 80°C for 30 min and 180°C for 30 min.

### «MANUFACTURE OF RADIOGRAPHIC IMAGE CONVERSION PANEL ACCORDING TO EXAMPLE 2»

A fluorine resin (TC-7105GN supplied from Daikin Industries Ltd.) film with a thickness of 25 µm was formed into a carbon fiber reinforced plastic plate by replacing polyimide in Example 1 with the fluorine resin, spray-coating and drying. The spray-coating was performed using a spraygun for high pressure with a nozzle pressure of 0.3 MPa at a distance of 15 cm away from the substrate.

### «MANUFACTURE OF RADIOGRAPHIC IMAGE CONVERSION PANEL ACCORDING TO EXAMPLE 3»

A polyamideimide film with a thickness of 10 µm was formed into a carbon fiber reinforced plastic plate by replacing polyimide in Example 1 with polyamideimide (Vylomax HR12N2 supplied from Toyobo Co., Ltd.), coating by a bar coater and drying.

### «MANUFACTURE OF RADIOGRAPHIC IMAGE CONVERSION PANEL ACCORDING TO EXAMPLE 4»

A fluorine resin film with a thickness of 25 µm was formed into a carbon fiber reinforced plastic plate by replacing polyimide in Example 1 with the fluorine resin (TC-7898SLM supplied from Daikin Industries Ltd.), spray-coating and drying.

### «MANUFACTURE OF RADIOGRAPHIC IMAGE CONVERSION PANEL ACCORDING TO EXAMPLE 5»

The manipulation was performed as was the case with Example 1, except replacing the carbon fiber reinforced plastic plate with a cured epoxy plate (epoxy plate with a thickness of 3.5 mm custom-ordered to Toho Tenax Co., Ltd.).

### «MANUFACTURE OF RADIOGRAPHIC IMAGE CONVERSION PANEL ACCORDING TO EXAMPLE 6»

A fluorine resin film with a thickness of 25 µm was formed into a polycarbonate plate by replacing the carbon fiber reinforced plastic plate and polyimide in Example 1 with the polycarbonate plate (supplied from Toho Tenax Co., Ltd., thickness of 4 mm) and the fluorine resin (TC-7105GN supplied from Daikin Industries Ltd.), respectively, spray-coating and drying.

### «MANUFACTURE OF RADIOGRAPHIC IMAGE CONVERSION PANEL ACCORDING TO EXAMPLE 7»

The manipulation was performed as was the case with Example 1, except replacing the carbon fiber reinforced plastic plate in Example 1 with an aluminium plate (A1050-H24MF supplied from Sumitomo Light Metal Industries, Ltd., thickness of 0.5 mm).

### «MANUFACTURE OF RADIOGRAPHIC IMAGE CONVERSION PANEL ACCORDING TO COMPARATIVE EXAMPLE 1>>

An acrylic resin film with a thickness of 20 µm was formed into a carbon fiber reinforced plastic plate by replacing polyimide in Example 1 with the acrylic resin (Sunever SUN-4001, supplied from Nissan Chemical Industries, Ltd.), coating by a bar coater and drying.

### «MANUFACTURE OF RADIOGRAPHIC IMAGE CONVERSION PANEL ACCORDING TO COMPARATIVE EXAMPLE 2»

A polysiloxane resin film with a thickness of 10 µm was formed into a carbon fiber reinforced plastic plate by replacing acryl in Comparative Example 1 with the polysiloxane resin (polysiloxane graft polymer SG-204 supplied from Nippon Shokubai Co., Ltd.), coating by a bar coater and drying.

### «MANUFACTURE OF RADIOGRAPHIC IMAGE CONVERSION PANEL ACCORDING TO COMPARATIVE EXAMPLE 3»

The manipulation was performed by replacing the carbon fiber reinforced plastic plate in Comparative Example 1 with 0.7 mm of Tempax glass (Pyrex glass).

### «MANUFACTURE OF RADIOGRAPHIC IMAGE CONVERSION PANEL ACCORDING TO COMPARATIVE EXAMPLE 4»

The carbon fiber reinforced plastic plate in Comparative Example 1 was replaced with a cured epoxy plate (trial product EA-2), and no heat resistant resin film was formed.

These supports were placed in a vacuum chamber of a deposition apparatus, and a crucible (deposition source) in which the photostimulable phosphor made up of CsBr:0.001Eu had been placed was placed. Except for Comparative Example 4, a face of the substrate, on which the heat resistant resin layer had been formed was directed to the deposition source. In Comparative Example 4, either one face of the substrate was directed to the deposition source. A slit made from aluminium was disposed between the substrate and the deposition source. A distance between the substrate and the deposition source was 60 cm. Then, argon gas was introduced into the vacuum chamber, and a vacuum degree was made 0.27 Pa.

The deposition was performed with feeding the substrate in a parallel direction to the substrate such that vapor of the photostimulable phosphor passes through the slit made from aluminium to enter at an incident angle of 0° against a normal line direction of the substrate. Except for Comparative Example 4, the deposition was performed onto the face of the substrate, on which the heat resistant resin layer had been formed. In Comparative Example 4, the deposition was performed onto either one face of the substrate. As in the above, the photostimulable phosphor layer having a columnar crystal structure with a thickness of 300 µm was obtained.

A laminated protection film A comprising an alumina deposition polyethylene terephthalate resin layer represented by the following configuration was made, and this was used as a moisture-proof protection film.

### LAMINATED PROTECTION FILM A: VMPET12///VMPET 12//PET

In the laminated protection film A, VMPET represents alumina-deposited polyethylene terephthalate (commercially available article: supplied from Toyo Metallizing Co., Ltd.), and PET represents polyethylene terephthalate. Also, the above "///" represents that a thickness of a urethane type adhesive agent layer of two liquid reaction type in a dry lamination adhesive layer is 3.0 µm, and a numeral displayed after each resin film represents a film thickness (µm) of each film.

The photostimulable phosphor plate was enfolded with the moisture-proof protection film, and the substrate and the protection film were heated, fused and sealed with reducing pressure using an impulse sealer at an outside region from a phosphor periphery of the phosphor side to make the radiographic image conversion panel.

### <MEASUREMENT OF REFLECTANCE>

The reflectance (%) was measured using a spectrophotometer 557 supplied from Hitachi, Ltd., by making the substrate where aluminium was deposited on polyimide a standard. Values thereof are shown in the following Table 1.

### <EVALUATION OF CRACKS>

Whether cracks occurred in the photostimulable phosphor layer or not was evaluated by coating the heat resistant resin layer on the substrate, installing the photostimulable phosphor layer thereon by the vapor phase deposition method, taking out from the deposition apparatus in an instant, and leaving at room temperature for 3 hours. In the following Table 1, A denotes that there is no visual crack at all, B denotes that there are visual cracks partially, and C denotes that the photostimulable phosphor layer was peeled from the substrate by completely cracking.

### <EVALUATION OF LUMINANCE>

From a point 2 m apart from the radiographic image conversion panel, 10 mAs of X-ray with a tube voltage of 80 kVp was irradiated to the radiographic image conversion panel. Subsequently, the radiographic image conversion panel was placed in Konica Regius 350, and the photostimulated luminescence was read out. The evaluation was performed based on electric signals obtained from photomultiplier tubes. A value in Table 1 is a mean value of the entire photostimulable phosphor face, and a relative value when the luminance in Example 1 is made 1.08.

### <EVALUATION OF SHARPNESS DEGREE>

After attaching CTF chart on a sample at the substrate side of the radiographic image conversion panel, 10 mAs of X-ray with 80 kVp was irradiated from a point 1.5 apart from a photographic subject. Subsequently, semiconductor laser (power on the radiographic image conversion panel is 40 mV) with a diameter of 100 µm and wavelength of 680 nm scanned on the photostimulable phosphor layer, the photostimulated luminescence emitted from the excited photostimulable phosphor layer was received by photomultiplier tubes (R1305, supplied from Hamamatsu Photonics K.K.), converted to electric signals, and recorded on magnetic tape by A/D conversion. The recorded magnetic tape was analyzed by a computer to calculate a modulation transfer function of an X-ray image recorded on the magnetic tape. Values in the table indicate MTF values (modulation transfer function, %) at a spatial frequency of 2.0 Lp/mm. It is shown that the higher the MTF value, the better the sharpness degree is.

In the following Table 1, the reflectance (% relative value), the evaluation of cracks, the evaluation of luminance and the evaluation of sharpness degree of the light with a wavelength of 400 to 500 nm or 640 to 700 nm in each Example and Comparative Example are shown.

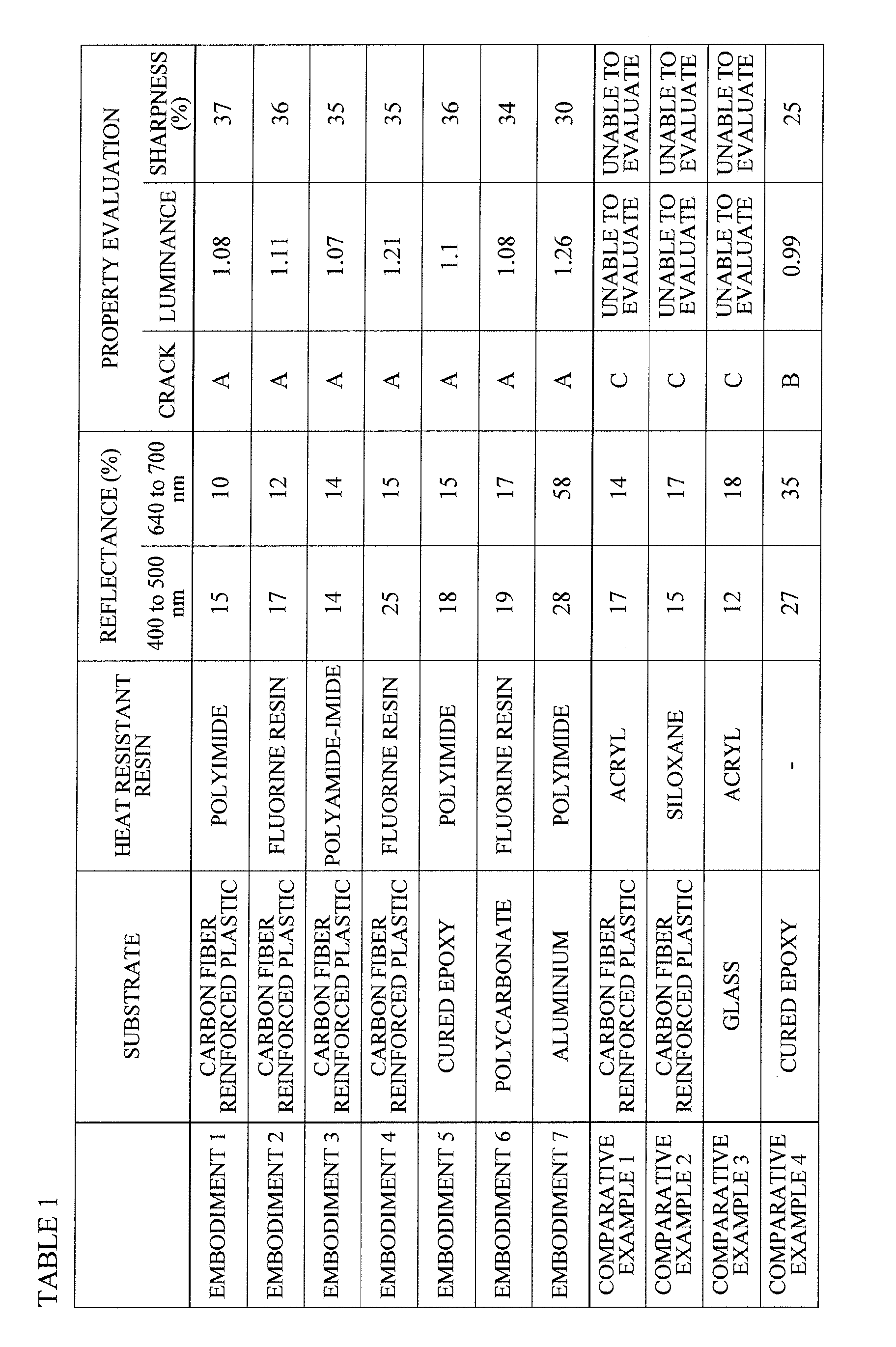

In the radiographic image conversion panel in Example 1, the reflectance of the light with a wavelength of 400 to 500 nm was 15%, and that with a wavelength of 640 to 700 nm was 10%. There was no visual crack at all on the photostimulable phosphor layer, the luminance was 1.08, and the sharpness degree was 37%.

In the radiographic image conversion panel in Example 2, the reflectance of the light with a wavelength of 400 to 500 nm was 17%, and that with a wavelength of 640 to 700 nm was 12%. There was no visual crack at all on the photostimulable phosphor layer, the luminance was 1.11, and the sharpness degree was 36%.

In the radiographic image conversion panel in Example 3, the reflectance of the light with a wavelength of 400 to 500 nm was 14%, and that with a wavelength of 640 to 700 nm was 14%. There was no visual crack at all on the photostimulable phosphor layer, the luminance was 1.07, and the sharpness degree was 35%.

In the radiographic image conversion panel in Example 4, the reflectance of the light with a wavelength of 400 to 500 nm was 25%, and that with a wavelength of 640 to 700 nm was 15%. There was no visual crack at all on the photostimulable phosphor layer, the luminance was 1.21, and the sharpness degree was 35%.

In the radiographic image conversion panel in Example 5, the reflectance of the light with a wavelength of 400 to 500 nm was 18%, and that with a wavelength of 640 to 700 nm was 15%. There was no visual crack at all on the photostimulable phosphor layer, the luminance was 1.1, and the sharpness degree was 36%.

In the radiographic image conversion panel in Example 6, the reflectance of the light with a wavelength of 400 to 500 nm was 19%, and that with a wavelength of 640 to 700 nm was 17%. There was no visual crack at all on the photostimulable phosphor layer, the luminance was 1.08, and the sharpness degree was 34%.

In the radiographic image conversion panel in Example 7, the reflectance of the light with a wavelength of 400 to 500 nm was 28%, and that with a wavelength of 640 to 700 nm was 58%. There was no visual crack at all on the photostimulable phosphor layer, the luminance was 1.26, and the sharpness degree was 30%.

In the radiographic image conversion panel in Comparative Example 1, the reflectance of the light with a wavelength of 400 to 500 nm was 17%, and that with a wavelength of 640 to 700 nm was 14%. The photostimulable phosphor layer was peeled from the substrate by completely cracking. The luminance and the sharpness degree could not be evaluated.

In the radiographic image conversion panel in Comparative Example 2, the reflectance of the light with a wavelength of 400 to 500 nm was 15%, and that with a wavelength of 640 to 700 nm was 17%. The photostimulable phosphor layer was peeled from the substrate by completely cracking. The luminance and the sharpness degree could not be evaluated.

In the radiographic image conversion panel in Comparative Example 3, the reflectance of the light with a wavelength of 400 to 500 nm was 12%, and that with a wavelength of 640 to 700 nm was 18%. The photostimulable phosphor layer was peeled from the substrate by completely cracking. The luminance and the sharpness degree could not be evaluated.

In the radiographic image conversion panel in Comparative Example 4, the reflectance of the light with a wavelength of 400 to 500 nm was 27%, and that with a wavelength of 640 to 700 nm was 35%. There were visual cracks partially on the photostimulable phosphor layer, the luminance was 0.99, and the sharpness degree was 25%.

In Examples 1 to 7, there was a tendency that the higher the reflectance of the light with a wavelength of 400 to 500, the higher the luminance was. Also, there was a tendency that the lower the reflectance of the light with a wavelength of 640 to 700 nm, the higher the sharpness degree was.

In Comparative Example 4 where the resin layer is not installed, the luminance was low although the reflectance of the light with a wavelength of 400 to 500 nm was relatively high. As the reason thereof, it is thought that surface property of the substrate was poor when the photostimulable phosphor layer is installed and there were cracks partially on the photostimulable phosphor layer.

From the above result, it is shown that the radiographic image conversion panel where no crack occurs on the photostimulable phosphor layer and which is excellent in luminance and sharpness degree is obtained by installing the heat resistant resin layer on the substrate, making the reflectance of the light with a wavelength of 400 to 500 nm high, and making the reflectance of the light with a wavelength of 640 to 700 low.

### <B> Supports were manufactured by changing a rigid value of a substrate.

### «MANUFACTURE OF RADIOGRAPHIC IMAGE CONVERSION PANEL ACCORDING TO EXAMPLE 8»

A heat resistant resin layer made up of polyimide film with a thickness of 10 µm was formed by making a carbon fiber reinforced plastic plate (CFRP#155C impregnated resin cured epoxy resin supplied from Toho Tenax Co., Ltd., a rigid value in a lengthwise direction is 1 kgf·mm², the rigid value in a crosswise direction is 3 kgf·mm².) with a thickness of 2 mm and a square size of 300 mm a substrate, coating polyimide (Underfill material Umekote supplied from Ube Industries Ltd.) thereon by a bar coater, and drying at two stages at 80°C for 30 min and 180°C for 30 min.

These supports were placed in a vacuum chamber of a deposition apparatus, and a crucible (deposition source) in which the photostimulable phosphor made up of CsBr:0.001Eu had been placed was placed. Except for Comparative Example 4, a face of the substrate, on which the heat resistant resin layer had been formed was directed to the deposition source. In Comparative Example 4, either one face of the substrate was directed to the deposition source. A slit made from aluminium was disposed between the substrate and the deposition source. A distance between the substrate and the deposition source was 60 cm. Then, argon gas was introduced into the vacuum chamber, and a vacuum degree was made 0.27 Pa.

The deposition was performed with feeding the substrate in a parallel direction to the substrate such that vapor of the photostimulable phosphor passes through the slit made from aluminium to enter at an incident angle of 0° against a normal line direction of the substrate. Except for Comparative Example 4, the deposition was performed onto the face of the substrate, on which the heat resistant resin layer had been formed. In Comparative Example 4, the deposition was performed on either one face of the substrate. As in the above, the photostimulable phosphor layer having a columnar crystal structure with a thickness of 300 µm was obtained.

A laminated protection film A comprising an alumina deposition polyethylene terephthalate resin layer represented by the following configuration was made, and this was used as a moisture-proof protection film.

### LAMINATED PROTECTION FILM A: VMPET12///VMPET 12//PET

In the laminated protection film A, VMPET represents alumina-deposited polyethylene terephthalate (commercially available article: supplied from Toyo Metallizing Co., Ltd.), and PET represents polyethylene terephthalate. Also, the above "///" represents that a thickness of a urethane type adhesive agent layer of two liquid reaction type in a dry lamination adhesive layer is 3.0 µm, and a numeral displayed after each resin film represents a membrane thickness (µm) of each film.

The photostimulable phosphor plate was enfolded with the moisture-proof protection film, and the substrate and the protection film were heated, fused and sealed with reducing pressure using an impulse sealer at an outside region from a phosphor periphery of the phosphor side to make the radiographic image conversion panel.

### «MANUFACTURE OF RADIOGRAPHIC IMAGE CONVERSION PANEL ACCORDING TO EXAMPLE 9»

A radiographic image conversion panel was made as was the case with Example 8, except that the carbon fiber reinforced plastic plate in Example 8 was replaced with CFRP#167B (impregnated resin cured epoxy resin, the rigid value in the lengthwise direction: 9 kgf·mm², the rigid value in the crosswise direction: 10 kgf·mm²) supplied from Toho Tenax Co., Ltd.

### «MANUFACTURE OF RADIOGRAPHIC IMAGE CONVERSION PANEL ACCORDING TO EXAMPLE 10»

A radiographic image conversion panel was made as was the case with Example 8, except that the carbon fiber reinforced plastic plate in Example 8 was replaced with CFRP#167C (impregnated resin cured epoxy resin, the rigid value in the lengthwise direction: 15 kgf·mm², the rigid value in the crosswise direction: 80 kgf·mm²) supplied from Toho Tenax Co., Ltd.

### «MANUFACTURE OF RADIOGRAPHIC IMAGE CONVERSION PANEL ACCORDING TO EXAMPLE 11»

A radiographic image conversion panel was made as was the case with Example 8, except that the carbon fiber reinforced plastic plate in Example 8 was replaced with CFRP#167D (impregnated resin cured epoxy resin, the rigid value in the lengthwise direction: 3 kgf·mm², the rigid value in the crosswise direction: 60 kgf·mm²) supplied from Toho Tenax Co., Ltd.

### «MANUFACTURE OF RADIOGRAPHIC IMAGE CONVERSION PANEL ACCORDING TO EXAMPLE 12»

A radiographic image conversion panel was made as was the case with Example 8, except that the carbon fiber reinforced plastic plate in Example 8 was replaced with CFRP#167E (impregnated resin cured epoxy resin, the rigid value in the lengthwise direction: 150 kgf·mm², the rigid value in the crosswise direction: 200 kgf·mm²) supplied from Toho Tenax Co., Ltd.

### «MANUFACTURE OF RADIOGRAPHIC IMAGE CONVERSION PANEL ACCORDING TO COMPARATIVE EXAMPLE 5»

A radiographic image conversion panel was made as was the case with Example 8, except that the carbon fiber reinforced plastic plate in Example 8 was replaced with CFRP#167E (impregnated resin cured epoxy resin, the rigid value in the lengthwise direction: 0.5 kgf·mm², the rigid value in the crosswise direction: 2 kgf·mm²) supplied from Toho Tenax Co., Ltd.

### «MANUFACTURE OF RADIOGRAPHIC IMAGE CONVERSION PANEL ACCORDING TO COMPARATIVE EXAMPLE 6»

A radiographic image conversion panel was made as was the case with Example 8, except that the carbon fiber reinforced plastic plate in Example 8 was replaced with CFRP#167F (impregnated resin cured epoxy resin, the rigid value in the lengthwise direction: 250 kgf·mm², the rigid value in the crosswise direction: 250 kgf·mm²) supplied from Toho Tenax Co., Ltd.

### <EVALUATION OF LUMINANCE>

The luminance was evaluated as was the case with <A>. A value in Table 2 is a mean value of the entire photostimulable phosphor face, and a relative value when the luminance in Example 8 is made 1.00.

### <EVALUATION OF SHARPNESS DEGREE>

The sharpness degree was evaluated as was the case with <A>. Values in the table indicate MTF values (modulation transfer function, %) at a spatial frequency of 2.0 Lp/mm. It is shown that the higher the MTF value, the better the sharpness degree is.

### <EVALUATION OF VIBRATION PROPERTY>

A string was attached to a tennis ball, which was then was hung from an upper section of a reading apparatus such that the tennis ball was contacted with a front face plate at the substrate side of the radiographic image conversion panel. Then, a spacer with a thickness of 5 cm was sandwiched with the front face plate and the tennis ball to secure the tennis ball.

From a radiation source 2 m apart from the radiographic image conversion panel, 200 mAs of X-ray with a tube voltage of 80 kVp was irradiated. After one min, laser reading was started. At that time, vibration was given by silently removing the spacer to hit the tennis ball to the front face plate.

Signal value step difference of transverse line-shaped noise which occurred at that time from environmental signal values was analyzed, and evaluated as follows. Since the signal value in the transverse line-shaped noise becomes high, it is better that the step difference is smaller.
A: Excellent with step difference of 0 to 2
AB: Good with step difference of 3 to 5
C: Fault with step difference of 12 or more.

The above results are shown in the following Table 2.

**TABLE 2**

| | REGID VALUE OF SUBSTRATE EI (kgf/mm²) | | PROPERTY EVALUATION | | |
|---|---|---|---|---|---|
| | LENGTHWIDE DIRECTION | CROSSWIDE DIRECTION | LUMINANCE | SHARPNESS | VIBRATION PROPERTY |
| EMBODIMENT 8 | 1 | 3 | 1.00 | 37% | A |
| EMBODIMENT 9 | 9 | 10 | 0.97 | 36% | AB |
| EMBODIMENT 10 | 15 | 80 | 1.07 | 39% | A |
| EMBODIMENT 11 | 3 | 60 | 0.98 | 35% | A |
| EMBODIMENT 12 | 150 | 200 | 0.95 | 36% | AB |
| COMPARATIVE EXAMPLE 5 | 0.5 | 2 | 1.01 | 36% | C |
| COMPARATIVE EXAMPLE 6 | 250 | 250 | 0.93 | 34% | C |

In Examples 8 to 12, there was less transverse line-shaped noise which occurred by the vibration, and both luminance and sharpness degree were favorable. In Comparative Examples 5 and 6, the vibration property was poor.

From the above result, it is shown that the occurrence of the transverse line-shaped noise can be inhibited by making the rigid value in the crosswise direction higher than the rigid value in the lengthwise direction and that the radiographic image conversion panel which is excellent in vibration property is obtained.

## Claims

1. A radiographic image conversion panel comprising:
a support, and a photostimulable phosphor layer formed by a vapor phase deposition method on the support;
wherein the support comprises a substrate and a heat resistant resin layer applied onto one surface of the substrate, and
the photostimulable phosphor layer is formed on a resistant resin layer side of the support.

2. The panel of claim 1, wherein the substrate comprises at least one selected from the group consisting of thermosetting resin, carbon fiber reinforced plastic and thermoplastic resin.

3. The panel of claim 1 or 2, wherein the heat resistant resin layer comprises at least one selected from the group consisting of polyimide, polyamideimide and fluorine resin.

4. The panel of any one of claims 1 to 3, wherein the heat resistant resin layer has a light reflectance of 8 % or more at a wavelength of 400 to 500 nm and the light reflectance of 5 to 70 % at a wavelength of 640 to 700 nm.

5. The panel of any one of claims 1 to 4, wherein a rigid value of the substrate in a crosswise direction is larger than the rigid value in a lengthwise direction, the rigid value in the crosswise direction is 3 to 200 kgf·mm², and the rigid value in the lengthwise direction is 1 to 150 kgf·mm².

6. The panel of any one of claims 1 to 5, wherein the photostimulable phosphor layer comprises a photositmulable phosphor represented by the following general formula (1),
CsX : eA (1)
wherein X represents Cl, Br or I, A represents Eu, Sm, In, Tl, Ga or Ce, and e represents a numeral value within a range of 1 x 10⁻⁷ < e < 1 x 10⁻².

7. A method for manufacturing a radiographic image conversion panel comprising:
forming a support by applying a heat resistance resin onto one surface of a substrate by a spray-coating, and subsequently, and
forming a photostimulable phosphor layer onto one surface of the support where the heat resistant resin is applied, by a vapor phase deposition method.
